# EUROPÄISCHE PATENTSCHRIFT

(11) **EP 2 745 025 B1**
(45) Veröffentlichungstag und Bekanntmachung des Hinweises auf die Patenterteilung: **27.02.2019**
(21) Anmeldenummer: 12729108.6
(22) Anmeldetag: 20.06.2012
(51) Int. Cl.: F16D 1/116

(54) **GETRIEBE-ANTRIEBSEINRICHTUNG**
TRANSMISSION DRIVE ASSEMBLY
DISPOSITIF D'ENTRAÎNEMENT À TRANSMISSION

(30) Priorität: 16.08.2011 DE 102011081043
(43) Veröffentlichungstag der Anmeldung: 25.06.2014
(73) Patentinhaber: Robert Bosch GmbH, 70442 Stuttgart (DE)
(72) Erfinder: SCHORPP, Gerold, 76474 Au am Rhein (DE); HEITZ, Robert, 76437 Rastatt (DE); STEUER, Peter, 76149 Karlsruhe (DE); REICHMANN, Siegfried, 77866 Rheinau Freistett (DE)
(86) Internationale Anmeldenummer: PCT/EP2012/061843
(87) Internationale Veröffentlichungsnummer: WO 2013/023822

(56) Entgegenhaltungen:
- EP-A1- 2 140 931
- DE-A1- 19 813 573
- US-A- 5 522 669
- US-A- 5 641 238

## Beschreibung

### Stand der Technik

Siehe auch EP2140931 und DE19813573.

Aus der DE 10 2009 028 133 A1 der Anmelderin ist eine Lagereinrichtung zur Verwendung in einer Getriebe-Antriebseinrichtung bekannt, bei der ein Lager, das der Lagerung der Ankerwelle eines elektrischen Antriebsmotors dient, in einem hülsenförmigen Aufnahmeelement aufgenommen ist, das wiederum in eine Aufnahme eines Gehäuses, insbesondere eines Getriebegehäuses, einsetzbar ist. Dabei ist das Lager in dem Aufnahmeelement form- bzw. kraftschlüssig aufgenommen.
Zur Montage des Antriebsmotors an einem Gehäuse einer Getriebe-Antriebseinrichtung ist es aus der Praxis bekannt, ein Aufnahmeelement auf der Ankerwelle in einer axialen ersten Endposition anzuordnen. Diese erste Endposition wird durch Andrücken des Aufnahmeelements gegen einen Anschlag, insbesondere gegen ein zumindest mittelbar mit einer Bürsteneinrichtung des Antriebsmotors gekoppeltes Teil, erzielt. Problematisch dabei ist, dass das Aufnahmeelement in dieser Endposition während des Betriebs der Getriebe-Antriebseinrichtung zu Geräuschen neigt sowie die Bürsteneinrichtung mechanisch belastet.

### Offenbarung der Erfindung

Ausgehend von dem dargestellten Stand der Technik liegt der Erfindung die Aufgabe zugrunde, eine Getriebe-Antriebseinrichtung nach dem Oberbegriff des Anspruchs 1 derart weiterzubilden, dass durch die konstruktive Ausbildung der Getriebe-Antriebseinrichtung ein einfacher Montageprozess erzielt wird, derart, dass eine sichere und definierte Endposition des Aufnahmeelements nach der Montage an bzw. in dem Getriebegehäuse erzielbar ist, bei der durch einen axialen Abstand des Aufnahmeelements zur Bürsteneinrichtung Geräusche reduziert und die mechanische Belastung der Bürsteneinrichtung reduziert wird. Diese Aufgabe wird bei einer Getriebe-Antriebseinrichtung mit den Merkmalen des Anspruchs 1 erfindungsgemäß dadurch gelöst, dass in einer Montageposition zum Einführen und Positionieren des Aufnahmeelements in der Aufnahme des Getriebegehäuses das Aufnahmeelement in einer durch ein Anschlagelement des Antriebsmotors definierten ersten axialen Endlage positioniert ist, und dass in einer Endposition der Antriebswelle in dem Getriebegehäuse mittels eines Verschiebeelements das Aufnahmeelement in eine von dem wenigstens einen Anschlagelement axial entfernte zweite axiale Endlage verschiebbar ist. Mit anderen Worten gesagt bedeutet dies, dass zur Montage des Antriebsmotors an dem Getriebegehäuse das Aufnahmeelement zunächst eine definierte erste Soll-Position einnimmt, aus der das Aufnahmeelement bei der Montage in die zweite, endgültige Soll-Position verbracht wird. Durch diese beiden Soll-Positionen werden somit definierte Lagen des Aufnahmeelements und somit der Lagereinrichtung auf der Antriebswelle erzeugt, die einen besonders sicheren Montageprozess erlauben und darüber hinaus die erwähnten Nachteile des Stands der Technik vermeiden.

Vorteilhafte Weiterbildungen der erfindungsgemäßen Getriebe-Antriebseinrichtung sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

Zur Erzielung der ersten axialen Endlage des Aufnahmeelements wird in einer konstruktiven Umsetzung der Erfindung vorgeschlagen, dass das Aufnahmeelement auf der der Aufnahme des Getriebegehäuses abgewandten Seite mit einer Stirnfläche zumindest mittelbar an einer als Anschlagelement wirkenden, axial ortsfest auf der Antriebswelle angeordneten Einrichtung, insbesondere einer Bürstenhaltereinrichtung des Antriebsmotors, anliegt. Es wird somit der sowieso vorhandene Bürstenhalter bzw. einem Sicherungsring für den Bürstenhalter als Anschlagelement für das Aufnahmeelement verwendet.

Ganz besonders bevorzugt ist es dabei vorgesehen, dass das Aufnahmeelement einen flanschartig umlaufenden Rand aufweist, der die Stirnfläche ausbildet, und dass der Rand mit wenigstens einem Sicherungselement zusammenwirkt, das eine Verschiebbarkeit des Aufnahmeelements auf der Antriebswelle begrenzt. Dadurch wird einerseits eine besonders sichere bzw. flächige Anlage des Aufnahmeelements an der Einrichtung (Bürstenhalter bzw. Sicherungsring) ermöglicht, während andererseits ein Loslösen bzw. Verlieren des Aufnahmeelements während der Montage sicher vermieden werden kann.

Um eine definierte Soll-Position der Lagereinrichtung auf der Antriebswelle in der zweiten axialen Endposition zu erzielen, und andererseits die Verschiebekräfte für das Aufnahmeelement zum Erreichen der zweiten Endposition möglichst gering zu halten, wird darüber hinaus in weiterer vorteilhafter Ausgestaltung vorgeschlagen, dass das Lager in dem Aufnahmeelement axial fixiert und auf der Antriebswelle axial verschiebbar angeordnet ist.

Zum Erzielen der axialen Verschiebbarkeit des Aufnahmeelements auf der Antriebswelle mittels des Verschiebeelements wird vorgeschlagen, dass das Aufnahmeelement eine radial umlaufende Wand aufweist, und dass in der Wand wenigstens eine Ausnehmung ausgebildet ist, die zum axialen Verschieben des Aufnahmeelements mit dem Verschiebeelement zusammenwirkt.

In besonders einfacher Art und Weise wird eine Verschiebung des Aufnahmeelements bewirkt, wenn das Verschiebeelement oder die Ausnehmung wenigstens eine Schräge aufweist, die bei einem Einwirken des Verschiebeelements eine axiale Verschiebung des Aufnahmeelements bewirkt.

In fertigungstechnisch und kostenmäßig günstiger Ausbildung wird vorgeschlagen, dass das Aufnahmeelement als Tiefziehteil und die Ausnehmung als Durchbruch ausgebildet sind, und dass die wenigstens eine Schräge an dem Verschiebeelement ausgebildet ist.

Ganz besonders bevorzugt ist eine Ausgestaltung der Erfindung, bei der das Verschiebeelement ein Bestandteil des Getriebegehäuses, insbesondere ein Deckelelement des Getriebegehäuses, ist. Dadurch kann einerseits auf zusätzliche, zum Verschieben des Aufnahmeelements erforderliche, separate Bauteile verzichtet werden, und zum anderen kann durch eine entsprechende Ausgestaltung des Getriebegehäuses bzw. des Deckelelements sichergestellt werden, dass nach Montage des Deckelelements das Aufnahmeelement seine Soll-Position erreicht.

Alternativ ist es jedoch auch denkbar, dass das Verschiebeelement als ein von dem Getriebegehäuse separates Bauteil ausgebildet ist. Eine derartige Ausbildung hat den Vorteil, dass die Anordnung bzw. Ausbildung der Ausnehmung an dem Aufnahmeelement unabhängig beispielsweise von der Anordnung des Deckelelements erfolgen kann.

Um den Montageprozess darüber hinaus besonders einfach und zuverlässig zu gestalten, kann es vorgesehen sein, dass die Aufnahme in dem Getriebegehäuse von einer Wand begrenzt ist, in der ein Durchbruch ausgebildet ist, und dass der Durchbruch in Ausrichtung mit der Ausnehmung angeordnet ist und eine Führung für das Verschiebeelement ausbildet.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1 und 2: Bestandteile eines Antriebsmotors einer Getriebe-Antriebseinrichtung vor und nach der Montage einer Bürstenhaltereinrichtung und eines Aufnahmeelements in perspektivischer Ansicht,
- Fig. 3: den Antriebsmotor gemäß Fig. 2 vor der Montage in ein Getriebegehäuse, in perspektivischer Ansicht,
- Fig. 4: einen in einem abgewandelten Getriebegehäuse bereits montierten Antriebsmotor vor dem Verschließen des Getriebegehäuses mittels eines Getriebedeckels, in perspektivischer Ansicht,
- Fig. 5 und 6: den Bereich eines Aufnahmeelements im Bereich des Getriebegehäuses vor und nach der Montage eines Getriebegehäusedeckels im Längsschnitt und
- Fig. 7 und 8: jeweils verschiedene Darstellungen mit gegenüber den Fig. 6 und 7 veränderter Montage des Aufnahmeelements.

Gleiche Bauteile bzw. Bauteile mit gleicher Funktion sind in den Figuren mit den gleichen Bezugsziffern versehen.

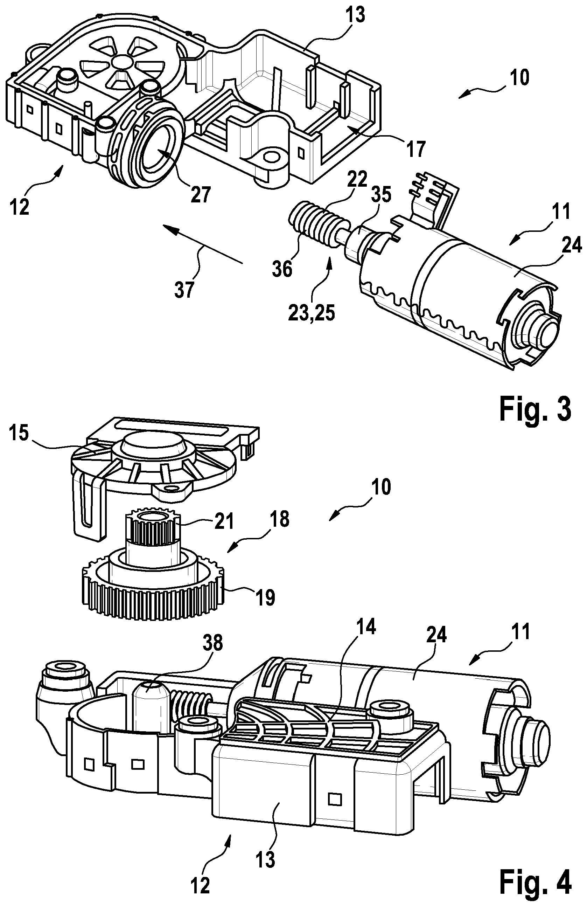

In der Fig. 4 sind die wesentlichen Bestandteile einer erfindungsgemäßen Getriebe-Antriebseinrichtung 10 dargestellt, wie sie insbesondere als Bestandteil eines Komfortantriebs, beispielsweise eines Fensterheberantriebs, eines Schiebedachantriebs, eines Sitzverstellungsantriebs oder ähnlichem, in einem Kraftfahrzeug dient. Die Getriebe-Antriebseinrichtung 10 umfasst einen als (mechanisch kommutierten) Elektromotor ausgebildeten Antriebsmotor 11, der mit einem Getriebegehäuse 12 verbunden bzw. an diesem angeflanscht ist. Das Getriebegehäuse 12 weist beispielhaft ein schalenförmiges Unterteil 13 auf, dessen offene Oberseite mittels zweier separater Getriebegehäusedeckel 14, 15 (Gehäusedeckel 15 in Fig. 4 dargestellt) verschließbar ist, insbesondere mittels im Einzelnen nicht näher dargestellten Schraubverbindungen oder Rastverbindungen.

Das Getriebegehäuse 12 weist ebenfalls lediglich beispielhaft in Ausrichtung mit der Längsachse des Antriebsmotors 11 eine Öffnung 17 auf, die als Einschuböffnung zum Einschieben einer Einschubelektronik mit daran angeordnetem Stecker zur Kontaktierung mit dem Kabelbaum des Kraftfahrzeugs dient (nicht dargestellt). Innerhalb des Getriebegehäuses 12 ist ein ein- oder mehrstufiges Getriebe angeordnet, das ein in der Fig. 4 erkennbares Stirnrad 18 mit einer Außenverzahnung 19 aufweist. Das Stirnrad 18 weist darüber hinaus einen aus dem Getriebegehäuse 12 an dessen Oberseite herausragenden Mitnehmerabschnitt 21 auf, der zumindest mittelbar mit einem zu verstellenden Element der Getriebe-Antriebseinrichtung 10, insbesondere einer Fensterscheibe oder einem Sitz, verbunden ist.

Die Außenverzahnung 19 des Stirnrades 18 kämmt mit einem Verzahnungsabschnitt 22 einer Antriebswelle 23 des Antriebsmotors 11. Hierzu ragt ein aus dem Gehäuse 24 des Antriebsmotors 11 herausragender Teilbereich 25 in das Getriebegehäuse 12 hinein, wozu das Getriebegehäuse 12, im dargestellten Ausführungsbeispiel das Unterteil 13, eine ringförmige Aufnahme 27 aufweist, in die der Teilbereich 25 des Antriebsmotors 11 eingeführt werden kann.

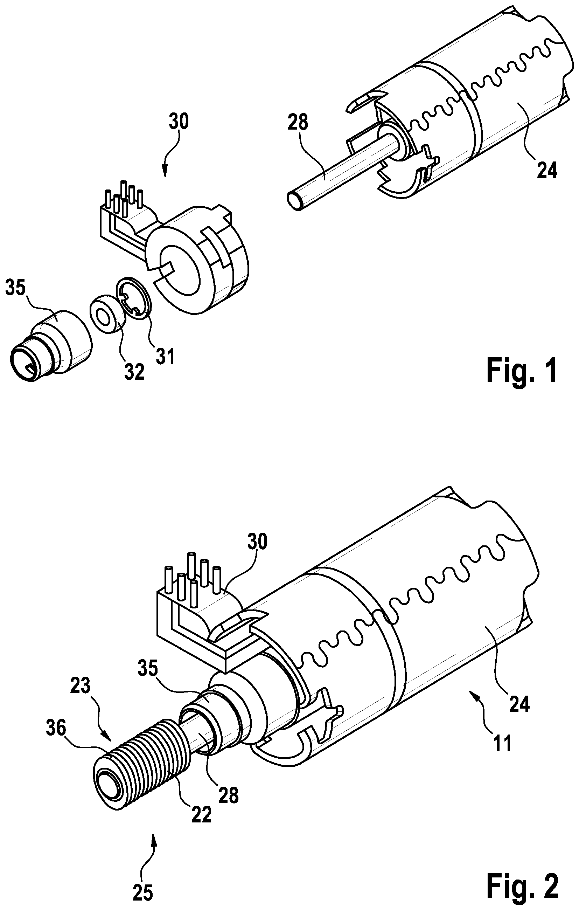

Wie insbesondere aus den Fig. 1 und 2 erkennbar ist, umfasst der Antriebsmotor 11 einen innerhalb des Gehäuses 24 angeordneten, in den Figuren nicht erkennbaren Anker, wobei eine Ankerwelle 28 gleichzeitig die Antriebswelle 23 bildet. Auf der Ankerwelle 28 ist in axialer Richtung eine Bürstenhaltereinrichtung 30 montierbar, die über eine Presspassung im Gehäuse 24 in ihrer axialen Position fixiert ist. Auf der Ankerwelle 28 ist weiterhin ein Lager 32, z.B. in Form eines Kalottenlagers, angeordnet, dessen axiale Position durch einen auf der Ankerwelle 28 angeordneten Sicherungsring 21 bestimmt ist. Das Lager 32 ist innerhalb eines im Wesentlichen hülsenförmigen Aufnahmeelements 35 aufgenommen, das das Lager 32 an dessen Außenumfang form- und kraftschlüssig umfasst, derart, dass das Lager 32 innerhalb des Aufnahmeelements 35 radial fixiert ist. Demgegenüber ist der Innendurchmesser des Lagers 32 bzw. der Außendurchmesser der Ankerwelle 28 derart bemessen, dass das Lager 32 auf der Ankerwelle 28 axial verschiebbar ist, ohne dass dabei die Position innerhalb des Aufnahmeelements 35 verändert wird. Das Aufnahmeelement 35 besteht vorzugsweise aus Blech und ist als Tiefziehteil ausgebildet. Zuletzt ist auf die Ankerwelle 28 ein hülsenförmiges Verzahnungselement 36 aufschiebbar und dort beispielsweise mittels einer Pressverbindung oder einer Laserschweißung verbunden, das den Verzahnungsabschnitt 22 trägt.

Der soweit beschriebene Antriebsmotor 11 lässt sich entsprechend der Fig. 3 in Richtung des Pfeils 37 mit dem Getriebegehäuse 12 verbinden, indem der Teilbereich 25 der Antriebswelle 23 in die Aufnahme 27 eingeführt wird. Anschließend wird entsprechend der Fig. 4 das Stirnrad 18 durch Aufstecken auf eine Achse 38 innerhalb des Getriebegehäuses 12 montiert, wobei gleichzeitig der Eingriff zwischen der Außenverzahnung 19 des Stirnrads 18 und dem Verzahnungsabschnitt 22 der Antriebswelle 23 hergestellt wird.

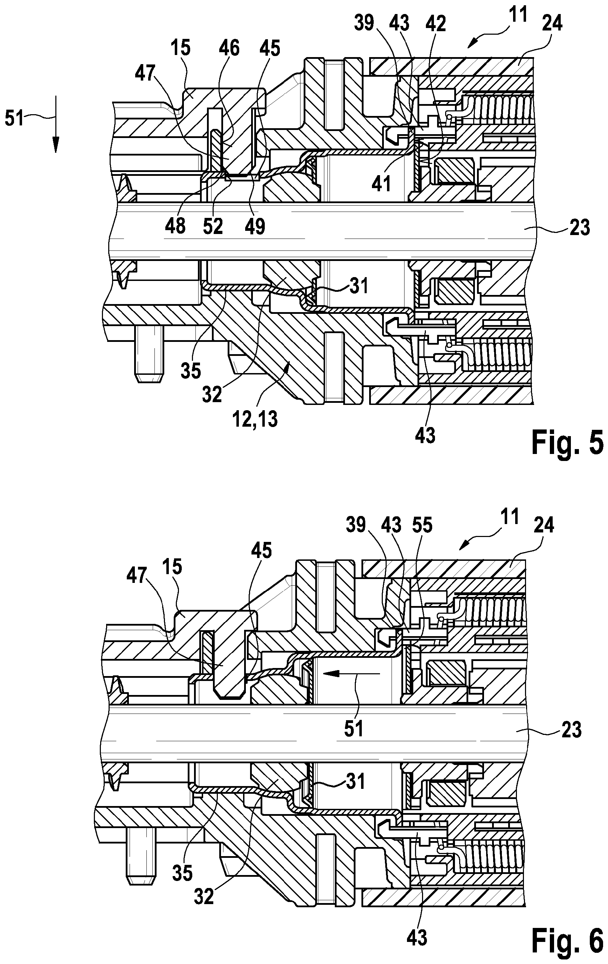

In der Fig. 5 ist der Zustand dargestellt, in dem sich die Antriebswelle 23 des Antriebsmotors 11 kurz vor dem Erreichen ihrer axialen Endposition innerhalb des Getriebegehäuses 12 befindet. Ferner ist in der Fig. 5 auch der Zustand dargestellt, bei dem das Aufnahmeelement 35 sich in der Montageposition befindet, die vor dem Einführen des Teilbereichs 25 in das Getriebegehäuse 12 vorhanden ist. Insbesondere erkennt man, dass ein radial umlaufender, flanschartiger Rand 39 des Aufnahmeelements 35 mit einer Stirnfläche 41 gegen die ihm gegenüberliegende Stirnfläche 42 der Bürstenhaltereinrichtung 30 anliegt. Das Aufnahmeelement 35 befindet sich somit in direktem Anlagekontakt mit der Bürstenhaltereinrichtung 30. Diese Position stellt eine erste axiale Endlage des Aufnahmeelements 35 auf der Antriebswelle 23 dar. Weiterhin liegt das Lager 32 an dem Sicherungsring 31 an.

Der Rand 39 des Aufnahmeelements 35 ist von mehreren, vorzugsweise in gleichmäßigen Winkelabständen zueinander angeordneten Sicherungselementen in Form von Rasthaken 43 hintergriffen, die die axiale Beweglichkeit des Aufnahmeelements 35 auf der Antriebswelle 23 in eine von der Bürstenhaltereinrichtung 30 entgegengesetzte Richtung begrenzen.

Weiterhin ist in der Fig. 5 auf der dem Rand 39 gegenüberliegenden Seite des Lagers 32 in der Wand des Aufnahmeelements 35 eine Ausnehmung 45 erkennbar, die in Form eines Durchbruches ausgebildet ist, und die mit der (offenen) Öffnung des Unterteils 13 des Getriebegehäuses 12 ausgerichtet ist. In Ausrichtung bzw. Überdeckung mit der Ausnehmung 45 weist die ringförmige Aufnahme 27 des Getriebegehäuses 12 in einer Wand der Aufnahme 27 einen Durchbruch 46 auf, durch den ein Verschiebeelement in Form eines Vorsprunges 47 hindurchragt, der an der Unterseite des zweiten Getriebegehäusedeckels 15 einstückig angeformt ist. Der Vorsprung 47 weist auf der dem Durchbruch 46 bzw. der Ausnehmung 45 zugewandten Seite zwei Fasen bzw. Schrägen 48, 49 auf. Ferner ist die Breite des Vorsprungs 47 der Breite des Durchbruchs 46 angepasst, derart, dass der Durchbruch 46 beim Einführen des Getriebegehäusedeckels 15 in den Durchbruch 46 entsprechend des Pfeils 51 eine Führung für den Vorsprung 47 ausbildet.

In der Fig. 5 ist der Zustand dargestellt, bei dem die eine Schräge 48 beim Montieren des Getriebegehäusedeckels 15 entsprechend der Richtung des Pfeils 51 gerade in Anlagekontakt mit der ihr zugeordneten Kante 52 der Ausnehmung 45 des Aufnahmeelements 35 geraten ist. Wie man anhand der Fig. 6 erkennt, wird beim weiteren Niederdrücken des Getriebegehäusedeckels 15 in Richtung des Pfeils 51 der Vorsprung 47 vollständig in die Ausnehmung 45 eingeführt, was zur Folge hat, dass das Aufnahmeelement 35 in Richtung des Pfeils 53 auf der Ankerwelle 28 axial bewegt wird, so dass sich zwischen der Stirnfläche 41 des Rands 39 und der ihr gegenüberliegenden Stirnfläche 42 der Bürstenhaltereinrichtung 30 ein Spalt 55 ausbildet. Durch den Spalt 55 wird eine Entkoppelung des Aufnahmeelements 35 von der Bürstenhaltereinrichtung 30 bewirkt, die eine Geräuschentkoppelung des Aufnahmeelements 35 und eine mechanische Entlastung für die Bürstenhaltereinrichtung 30 zur Folge hat. In der Fig. 6 ist somit das Aufnahmeelement 35 in seiner axialen (zweiten) Endposition auf der Ankerwelle 28 angeordnet. Insbesondere durch Verschrauben bzw. Verrasten des Getriebegehäusedeckels 15 auf dem Unterteil 13 des Getriebegehäuses 12 ist während des Betriebs der Getriebe-Antriebseinrichtung 10 sichergestellt, dass sich diese axiale Endposition des Aufnahmeelements 35 nicht mehr ändert.

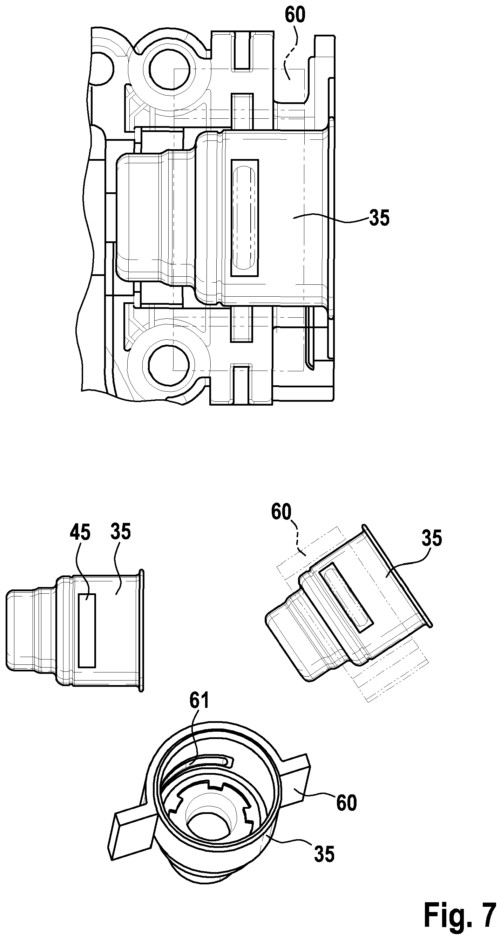

Bei dem in den Fig. 5 und 6 dargestellten Ausführungsbeispiel der Erfindung ist durch das in Form eines Vorsprungs 47 ausgebildete, einstückig an dem Getriebegehäusedeckel 15 angeformte Verschiebeelement die zweite axiale Endposition des Aufnahmeelements 35 gewährleistet. Bei dem in der Fig. 7 dargestellten Ausführungsbeispiel ist hingegen das Verschiebeelement als von dem Getriebegehäusedeckel 15 separates Bauelement in Form einer Lagerschelle 60 ausgebildet, die auf der der Ausnehmung 45 zugewandten Seite des Aufnahmeelements 35 einen Vorsprung 61 aufweist, der unmittelbar mit der Ausnehmung 45, ggf. ohne Führung einer ringförmigen Aufnahme 27 wie bei dem zunächst beschriebenen Ausführungsbeispiel, zusammenwirkt.

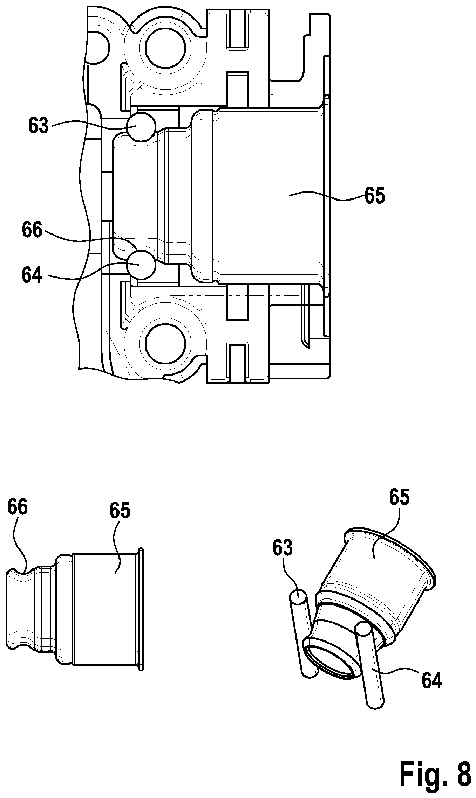

Zuletzt ist in der Fig. 8 ein Ausführungsbeispiel dargestellt, bei dem durch zwei stiftförmige Elemente 63, 64, die in eine an dem Aufnahmeelement 65 ausgebildete, radial umlaufende Ringnut 66 eingreifen, eine axiale Verstellung des Aufnahmeelements 65 bewirkt wird. Hierzu sind in dem Unterteil 13 des Getriebegehäuses 12 beispielsweise entsprechende Aufnahmebohrungen für die Elemente 63, 64 ausgebildet, so dass die Elemente 63, 64 axial in die Aufnahmebohrungen eingesteckt werden können und dabei das Aufnahmeelement 65 auf der Ankerwelle 28 axial positionieren. Anschließend wird ein (nicht dargestellter) Getriebegehäusedeckel auf das Unterteil 13 aufgesetzt, das ggf. gleichzeitig eine Sicherung der Elemente 63, 64 bewirkt. Alternativ können die Elemente 63, 64 auch in einem Gehäusedeckel integriert angeordnet sein (nicht dargestellt).

Die soweit beschriebene Getriebe-Antriebseinrichtung 10 kann in vielfältiger Art und Weise angewandelt bzw. modifiziert werden, ohne vom Erfindungsgedanken abzuweichen. Dieser besteht darin, die axiale (zweite) Endposition des Aufnahmeelements 35, 65 bei der Montage in dem bzw. an dem Getriebegehäuse 12 zu bewirken, wobei durch die axiale Entkoppelung der Aufnahmeeinrichtung 35, 65 besonders gute akustische und/oder mechanische Eigenschaften der Getriebe-Antriebseinrichtung 10 erzielt werden.

## Patentansprüche

1. Getriebe-Antriebseinrichtung (10), mit einem Antriebsmotor (11), dessen Antriebwelle (23) mit einem Teilbereich (25) in ein Getriebegehäuse (12) hineinragt, wobei die Antriebswelle (23) auf der dem Getriebegehäuse (12) zugewandten Seite in einem Lager (32) angeordnet ist, das in einem im Wesentlichen hülsenförmigen Aufnahmeelement (35; 65) form- und kraftschlüssig aufgenommen ist, das in einer Aufnahme (27) des Getriebegehäuses (12) angeordnet ist,
**dadurch gekennzeichnet,**
**dass** in einer Montageposition zum Einführen und Positionieren des Aufnahmeelements (35; 65) in der Aufnahme (27) des Getriebegehäuses (12) das Aufnahmeelement (35; 65) in einer durch ein Anschlagelement (30) des Antriebsmotors (11) definierten ersten axialen Endlage positioniert ist, und dass in einer Endposition der Antriebswelle (23) in dem Getriebegehäuse (12) mittels eines Verschiebeelements (47; 61; 62, 63) das Aufnahmeelement (35; 65) auf der Antriebswelle (23) in eine von dem wenigstens einen Anschlagelement axial entfernte zweite axiale Endlage verschiebbar ist.

2. Getriebe-Antriebseinrichtung nach Anspruch 1,
**dadurch gekennzeichnet,**
**dass** das Aufnahmeelement (35; 65) auf der der Aufnahme (27) des Getriebegehäuses (12) abgewandten Seite mit einer Stirnfläche (41) zumindest mittelbar an einer als Anschlagelement wirkenden, axial ortsfest auf der Antriebswelle (23) angeordneten Einrichtung, insbesondere einer Bürstenhaltereinrichtung (30) des Antriebsmotors (11), anliegt.

3. Getriebe-Antriebseinrichtung nach Anspruch 2,
**dadurch gekennzeichnet,**
**dass** das Aufnahmeelement (35; 65) einen flanschartig umlaufenden Rand (39) aufweist, der die Stirnfläche (41) ausbildet, und dass der Rand (39) mit wenigstens einem Sicherungselement (43) zusammenwirkt, das eine Verschiebbarkeit des Aufnahmeelements (35; 65) auf der Antriebswelle (23) begrenzt.

4. Getriebe-Antriebseinrichtung nach einem der Ansprüche 1 bis 3,
**dadurch gekennzeichnet,**
**dass** das Lager (32) in dem Aufnahmeelement (35; 65) axial fixiert und auf der Antriebswelle (23) axial verschiebbar angeordnet ist, und in der Montageposition gegen einen Sicherungsring (31) axial anliegt.

5. Getriebe-Antriebseinrichtung nach einem der Ansprüche 1 bis 4,
**dadurch gekennzeichnet,**
**dass** das Aufnahmeelement (35) eine radial umlaufende Wand aufweist, und dass in der Wand wenigstens eine Ausnehmung (45) ausgebildet ist, die zum axialen Verschieben des Aufnahmeelements (35) mit dem Verschiebeelement zusammenwirkt.

6. Getriebe-Antriebseinrichtung nach Anspruch 5,
**dadurch gekennzeichnet,**
**dass** das Verschiebeelement (47; 61) oder die Ausnehmung (45) wenigstens eine Schräge (48, 49) aufweist, die bei einem Einwirken des Verschiebeelements (47; 61) eine axiale Verschiebung des Aufnahmeelements (35) bewirkt.

7. Getriebe-Antriebseinrichtung nach Anspruch 6,
**dadurch gekennzeichnet,**
**dass** das Aufnahmeelement (35) als Tiefziehteil und die Ausnehmung (45) als Durchbruch ausgebildet sind, und dass die wenigstens eine Schräge (48, 49) an dem Verschiebeelement (47; 61) ausgebildet ist.

8. Getriebe-Antriebseinrichtung nach einem der Ansprüche 1 bis 7,
**dadurch gekennzeichnet,**
**dass** das Verschiebeelement (47) ein Bestandteil des Getriebegehäuses (12), insbesondere ein Deckelelement (15) des Getriebegehäuses (12) ist.

9. Getriebe-Antriebseinrichtung nach einem der Ansprüche 1 bis 7,
**dadurch gekennzeichnet,**
**dass** das Verschiebeelement (60; 63, 64) als ein vom Getriebegehäuse (12) separates Bauteil ausgebildet ist.

10. Getriebe-Antriebseinrichtung nach einem der Ansprüche 6 bis 8,
**dadurch gekennzeichnet,**
**dass** die Aufnahme (27) in dem Getriebegehäuse (12) von einer Wand begrenzt ist, in der ein Durchbruch (46) ausgebildet ist, und dass der Durchbruch (46) in Ausrichtung mit der Ausnehmung (45) angeordnet ist und eine Führung für das Verschiebeelement (47) ausbildet.

## Claims

1. Transmission/drive device (10), having a drive motor (11), the drive shaft (23) of which protrudes with a part region (25) into a transmission housing (12), the drive shaft (23) being arranged in a bearing (32) on the side which faces the transmission housing (12), which bearing (32) is received in a positively locking and non-positive manner in a substantially sleeve-shaped seat element (35; 65) which is arranged in a receptacle (27) of the transmission housing (12), **characterized in that**, in an assembly position for introducing and positioning the seat element (35; 65) in the receptacle (27) of the transmission housing (12), the seat element (35; 65) is positioned in a first axial end position which is defined by way of a stop element (30) of the drive motor (11), and **in that**, in an end position of the drive shaft (23) in the transmission housing (12), the seat element (35; 65) can be displaced on the drive shaft (23) by means of a displacing element (47; 61; 62, 63) into a second axial end position which is spaced apart axially from the at least one stop element.

2. Transmission/drive device according to Claim 1, **characterized in that**, on the side which faces away from the receptacle (27) of the transmission housing (12), the seat element (35; 65) bears with an end face (41) at least indirectly against a device which acts as a stop element and is arranged in an axially stationary manner on the drive shaft (23), in particular against a brush holder device (30) of the drive motor (11).

3. Transmission/drive device according to Claim 2, **characterized in that** the seat element (35; 65) has an edge (39) which runs around in a flange-like manner and configures the end face (41), and **in that** the edge (39) interacts with at least one securing element (43) which restricts a displaceability of the seat element (35; 65) on the drive shaft (23).

4. Transmission/drive device according to one of Claims 1 to 3, **characterized in that** the bearing (32) is fixed axially in the seat element (35; 65) and is arranged axially displaceably on the drive shaft (23), and bears axially against a securing ring (31) in the assembly position.

5. Transmission/drive device according to one of Claims 1 to 4, **characterized in that** the seat element (35) has a radially circumferential wall, and **in that** at least one recess (45) is configured in the wall, which at least one recess (45) interacts with the displacing element for the axial displacement of the seat element (35).

6. Transmission/drive device according to Claim 5, **characterized in that** the displacing element (47; 61) or the recess (45) has at least one chamfer (48, 49) which brings about an axial displacement of the seat element (35) in the case of an action of the displacing element (47; 61).

7. Transmission/drive device according to Claim 6, **characterized in that** the seat element (35) is configured as a deep-drawn part and the recess (45) is configured as an aperture, and **in that** the at least one chamfer (48, 49) is configured on the displacing element (47; 61).

8. Transmission/drive device according to one of Claims 1 to 7, **characterized in that** the displacing element (47) is a constituent part of the transmission housing (12), in particular a cover element (15) of the transmission housing (12).

9. Transmission/drive device according to one of Claims 1 to 7, **characterized in that** the displacing element (60; 63, 64) is configured as a component which is separate from the transmission housing (12).

10. Transmission/drive device according to one of Claims 6 to 8, **characterized in that** the receptacle (27) is delimited in the transmission housing (12) by a wall, in which an aperture (46) is configured, and **in that** the aperture (46) is arranged in alignment with the recess (45) and configures a guide for the displacing element (47).

## Revendications

1. Dispositif d'entraînement à transmission (10), comprenant un moteur d'entraînement (11), dont l'arbre d'entraînement (23) pénètre avec une région partielle (25) dans un carter de transmission (12), l'arbre d'entraînement (23) étant disposé du côté tourné vers le carter de transmission (12) dans un palier (32) qui est reçu par engagement par correspondance de formes et par force dans un élément de réception (35 ; 65) essentiellement en forme de douille qui est disposé dans un logement (27) du carter de transmission (12),
**caractérisé en ce que**
dans une position de montage pour l'introduction et le positionnement de l'élément de réception (35 ; 65) dans le logement (27) du carter de transmission (12), l'élément de réception (35 ; 65) est positionné dans une première position d'extrémité axiale définie par un élément de butée (30) du moteur d'entraînement (11), et **en ce que** dans une position d'extrémité de l'arbre d'entraînement (23) dans le carter de transmission (12), l'élément de réception (35 ; 65) peut être déplacé, au moyen d'un élément de coulissement (47 ; 61 ; 62, 63) sur l'arbre d'entraînement (23) dans une deuxième position d'extrémité axiale éloignée axialement de l'au moins un élément de butée.

2. Dispositif d'entraînement à transmission selon la revendication 1,
**caractérisé en ce que**
l'élément de réception (35 ; 65) s'applique, du côté opposé au logement (27) du carter de transmission (12), avec une surface frontale (41) au moins de manière indirecte contre un dispositif agissant en tant qu'élément de butée, disposé de manière fixée axialement sur l'arbre d'entraînement (23), en particulier un dispositif porte-balais (30) du moteur d'entraînement (11).

3. Dispositif d'entraînement à transmission selon la revendication 2,
**caractérisé en ce que**
l'élément de réception (35 ; 65) présente un bord périphérique de type bride (39), qui constitue la surface frontale (41), et **en ce que** le bord (39) coopère avec au moins un élément de fixation (43) qui limite une capacité de coulissement de l'élément de réception (35 ; 65) sur l'arbre d'entraînement (23).

4. Dispositif d'entraînement à transmission selon l'une quelconque des revendications 1 à 3,
**caractérisé en ce que**
le palier (32) est fixé axialement dans l'élément de réception (35 ; 65) et est disposé de manière à pouvoir coulisser axialement sur l'arbre d'entraînement (23), et s'applique axialement dans la position de montage contre une bague de fixation (31).

5. Dispositif d'entraînement à transmission selon l'une quelconque des revendications 1 à 4,
**caractérisé en ce que**
l'élément de réception (35) présente une paroi radialement périphérique, et **en ce que** dans la paroi est réalisé au moins un évidement (45) qui coopère avec l'élément de coulissement en vue du coulissement axial de l'élément de réception (35).

6. Dispositif d'entraînement à transmission selon la revendication 5,
**caractérisé en ce que**
l'élément de coulissement (47 ; 61) ou l'évidement (45) présente au moins un biseau (48, 49) qui, dans le cas d'une action de l'élément de coulissement (47 ; 61), provoque un coulissement axial de l'élément de réception (35).

7. Dispositif d'entraînement à transmission selon la revendication 6,
**caractérisé en ce que**
l'élément de réception (35) est réalisé sous forme de pièce emboutie profond et l'évidement (45) est réalisé sous forme d'orifice, et **en ce que** l'au moins un biseau (48, 49) est réalisé sur l'élément de coulissement (47 ; 61).

8. Dispositif d'entraînement à transmission selon l'une quelconque des revendications 1 à 7,
**caractérisé en ce que**
l'élément de coulissement (47) est un composant du carter de transmission (12), en particulier un élément de couvercle (15) du carter de transmission (12).

9. Dispositif d'entraînement à transmission selon l'une quelconque des revendications 1 à 7,
**caractérisé en ce que**
l'élément de coulissement (60 ; 63, 64) est réalisé sous la forme d'un composant séparé du carter de transmission (12).

10. Dispositif d'entraînement à transmission selon l'une quelconque des revendications 6 à 8,
**caractérisé en ce que**
le logement (27) est limité dans le carter de transmission (12) par une paroi dans laquelle est réalisé un orifice (46) et **en ce que** l'orifice (46) est disposé en alignement avec l'évidement (45) et constitue un guide pour l'élément de coulissement (47).
